Europäisches Patentamt

European Patent Office

Office européen des brevets

(11) Publication number: **0 464 690 A1**

## (12) EUROPEAN PATENT APPLICATION

(21) Application number: **91110688.8**

(22) Date of filing: **27.06.91**

(51) Int. Cl.⁵: **B60Q 1/04**

(30) Priority: **29.06.90 IT 6747490**
**12.04.91 IT 27791**

(43) Date of publication of application:
**08.01.92 Bulletin 92/02**

(84) Designated Contracting States:
**DE ES FR GB IT**

(71) Applicant: **CARELLO S.p.A.**
**Corso Unione Sovietica, 600**
**I-10135 Torino(IT)**

(72) Inventor: **Rivoira, Luigi**
**Via Bologna, 15**
**I-10090 Sangano(IT)**

(74) Representative: **Jorio, Paolo et al**
**Studio Torta, Via Viotti, 9**
**I-10121 Torino(IT)**

(54) **Adjustable reflector, particularly for vehicles headlights.**

(57) An adjustable reflector (1), particularly for vehicle headlights, wherein a reflector body (2) presents a number of integral rear appendixes (4), each connected, by means of a joint (6) consisting of two mating elements (7,9), to a respective device (3) supporting the reflector body (2). One (7) of the two elements (7,9) of each joint (6) is rendered integral with a respective appendix (4) by means of a fastening device (16,25) housed in forced manner inside an axial seat (11,22) formed on the free end of the appendix (4).

Fig.1

Fig.3

EP 0 464 690 A1

The present invention relates to an adjustable reflector, particularly for vehicle headlights, comprising a molded plastic reflector body having a number of integral rear appendixes, each connected to a respective, preferably adjustable, support by means of a respective, preferably spherical, joint comprising two mating elements, one of which is connected integral with the appendix.

Each appendix is normally connected to the respective joint element by means of an axial screw, which does not always provide for stable connection of the joint element and appendix due to the normally low density of the appendix and/or the presence of air bubbles due to the different thickness of the plastic material of the reflector body and appendixes.

It is an object of the present invention to provide an adjustable reflector, particularly for vehicle headlights, designed to overcome the aforementioned drawback.

According to the present invention, there is provided an adjustable reflector, particularly for vehicle headlights, comprising a reflector body of given, substantially constant thickness; a number of appendixes extending rearwards of and integral with said reflector body; a joint connecting each said appendix to a respective support, each said joint comprising a first and second mutually mating element; and fastening means for securing said first joint element to said respective appendix; characterised by the fact that each said appendix, commencing from its free end, presents a tubular portion defined by a lateral wall of substantially the same thickness as said reflector body; said lateral wall defining an axial seat; and said fastening means comprising a body of substantially the same shape as and housed inside said seat, and screw means for force fitting said body inside said seat.

According to a preferred embodiment of the above reflector, said seat and said body are substantially cylindrical; said body being made of elastically deformable material and having an axial through hole; and said screw means comprising a screw integral with said first joint element, and nut means connected to said screw and located on the opposite side of said first joint element in relation to said body.

According to an alternative embodiment of the above reflector, said seat and said body are substantially truncated-cone-shaped; said body presenting a diametrical transverse hole; and said screw means being self-threading screw means comprising a helical blade engaged through said diametrical hole; said blade presenting opposite end portions projecting outwards of said body and defining the thread of said self-threading screw means.

A number of non-limiting embodiments of the present invention will be described by way of example with reference to the accompanying drawings, in which:

Fig.1 shows a partial section of a first preferred embodiment of the reflector according to the present invention;

Fig.2 shows a larger-scale section along line II-II in Fig.1;

Fig.3 shows a partial section of a second preferred embodiment of the reflector according to the present invention;

Fig.4 shows a plan view of a portion of the Fig.3 reflector;

Fig.5 shows a larger-scale section along line V-V in Fig.3;

Fig.6 shows an enlarged side view of a detail in Fig.3;

Fig.7 shows an exploded partial section of a variation of the Fig.1 reflector;

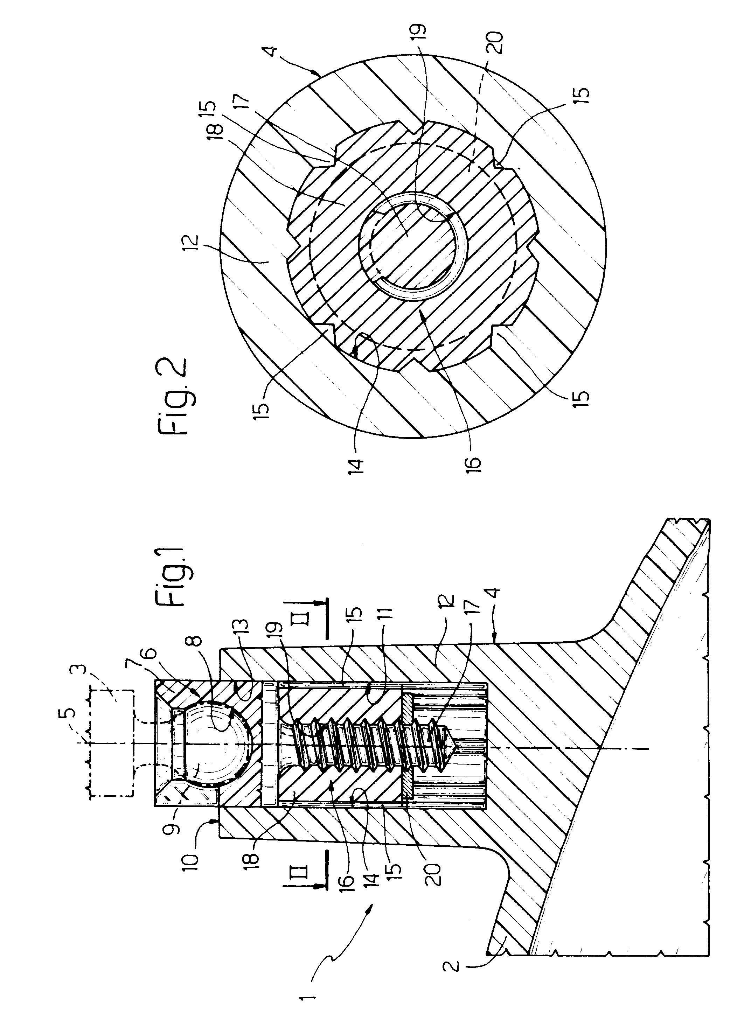

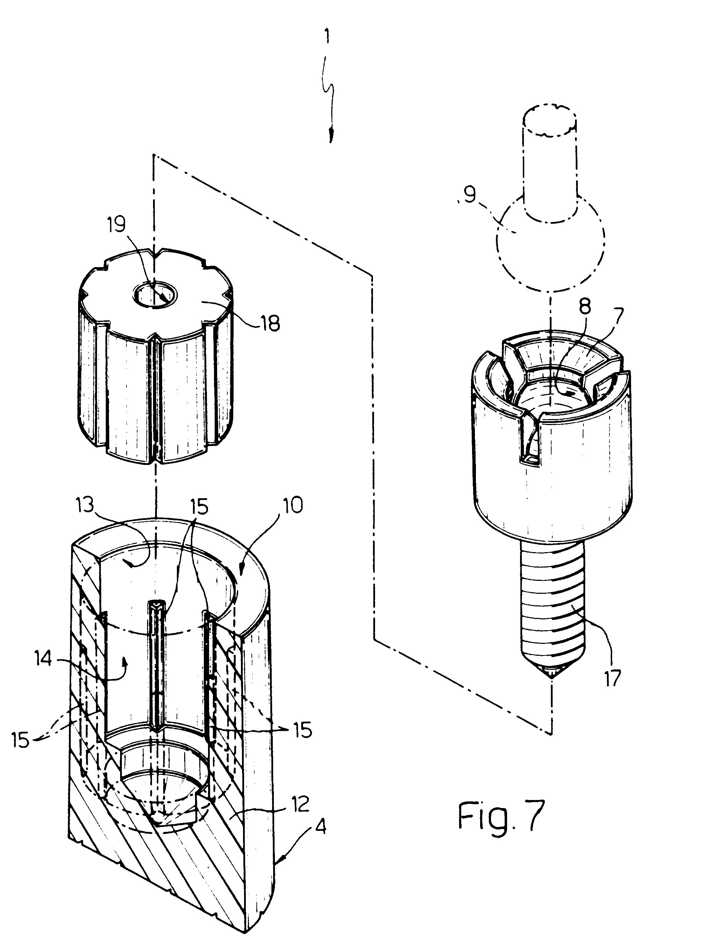

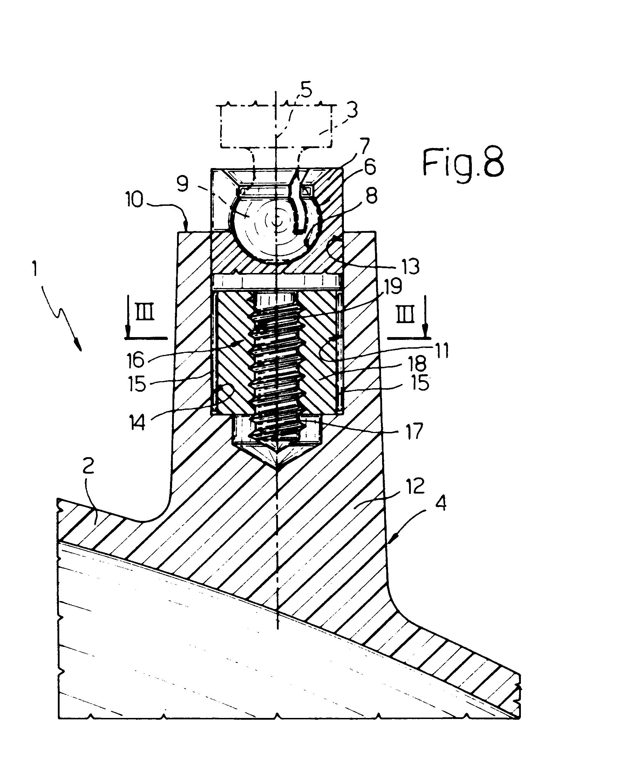

Fig.8 shows an unexploded view of the Fig.7 section. Number 1 in Fig.1 indicates an adjustable reflector, particularly for vehicle headlights, comprising a molded plastic reflector body 2 of substantially constant thickness, and a number of at least partially adjustable supports 3 (only one of which is shown by the dot-and-dash line in Fig.1), each connected to a respective molded plastic appendix 4. Each appendix 4 is molded in one piece with reflector body 2, and extends rearwards of reflector body 2 along a respective axis 5 substantially parallel to the optical axis (not shown) of reflector 1.

Each support 3 is connected to the free end of respective appendix 4 by means of a spherical joint 6 comprising a first socket-shaped element 7 defining a spherical seat 8 for a second element 9 in the form of a spherical head designed to click inside seat 8. In the example shown, said first element 7 is connected integral with respective appendix 4, while said second element 9 is connected to respective support 3.

Appendix 4, commencing from its free end surface 10, presents a molded axial seat 11 defined laterally by a tubular wall 12 of substantially the same thickness as reflector body 2. Commencing from surface 10, seat 11 presents a first smooth, substantially cylindrical portion 13, and a second substantially cylindrical portion 14 of the same diameter as portion 13 and having a number of axial, substantially triangular-section ribs 15.

Externally, each element 7 is substantially cylindrical, at most equal in diameter to seat 11, and connected to respective appendix 4 by means of a fastening device 16 force fitted inside respective seat 11.

Each device 16 comprises a screw 17 preferably molded from plastic in one piece with element 7 and extending axially from element 7 by less than the length of portion 14 of seat 11.

Each device 16 also comprises a cylindrical body 18 of elastically deformable, preferably elastomeric, material, shorter than screw 17 and the undeformed outside diameter of which is at most equal to the inside diameter of seat 11. Cylindrical body 18 presents an axial through hole 19 engaged by the intermediate portion of screw 17, the end portion of which projects from the end of cylindrical body 18 opposite that facing element 7, and engages a threaded hole formed through a washer 20 constituting the final element of device 16.

In use, element 7 is fitted inside portion 13 of seat 11, while cylindrical body 18 is fitted firmly inside portion 14 of seat 11, with its outer surface engaging ribs 15. When torqued externally by means of element 7, screw 17, via washer 20, axially compresses cylindrical body 18, which expands radially outwards to lock device 16 inside seat 11, in much the same way as an expansion screw.

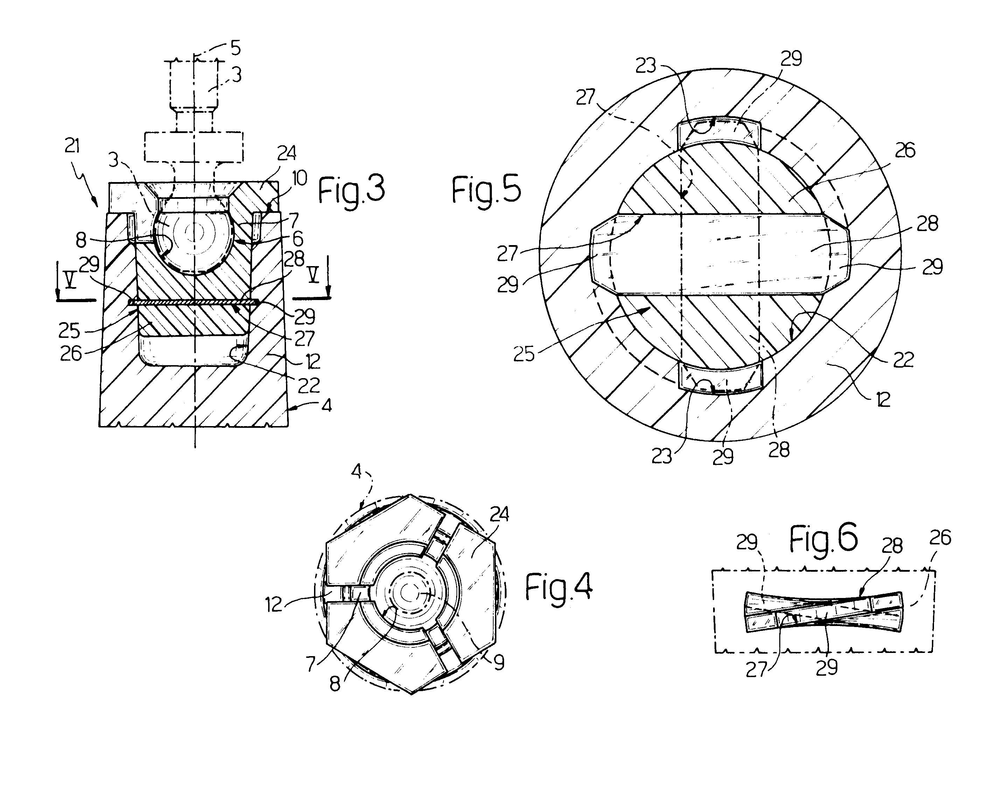

Fig.3 shows a reflector 21 of a different design, the parts of which similar to those of reflector 1 are indicated using the same numbering system.

Appendix 4 of reflector 21 presents an axial, truncated-cone-shaped seat 22 extending coaxially with axis 5 and decreasing in diameter from surface 10. As shown in Fig.5, the inside of wall 12 presents two longitudinal, diametrically-opposed grooves 23 extending parallel to axis 5 from surface 10.

Element 7 of spherical joint 6 presents a hexagonal outer flange 24 arranged, in use, contacting surface 10, and constitutes the end portion of a fastening device 25 comprising a truncated-cone-shaped body 26 preferably of molded plastic with substantially the same taper as seat 22.

Body 26 presents an intermediate diametrical passage 27 substantially perpendicular to axis 5 and engaged by a helical blade 28 which, viewed from above, is substantially in the form of a chamfered-cornered rectangle. Blade 28 presents two end portions 29, each projecting from passage 27 by a length at most equal to the depth of grooves 23, and each defining, by virtue of the helical shape of blade 28, a thread portion of a self-threading screw engaged inside seat 22.

In use, body 26 is fitted inside seat 22 in such an angular position, in relation to seat 22, that end portions 29 of blade 28 engage inside respective grooves 23. Using a tool (not shown) on flange 24, body 26 is then turned roughly 90° about axis 5, so as to cause portions 29 of blade 28 to cut wall 12 and so axially lock body 26 firmly inside seat 22 by virtue of the helical shape of blade 28.

The variation shown in Fig.s 7 and 8 is similar to the Fig.1 and 2 embodiment, the only difference being that washer 20 is eliminated, and cylindrical body 18 presents an axial through hole 19 having an undeformed diameter smaller than the outside diameter of screw 17. In particular, when undeformed, the difference between the inside diameter of seat 11 and the outside diameter of cylindrical body 18 is definitely less than the that between the diameters of screw 17 and hole 19.

In use, element 7 is fitted inside portion 13 of seat 11, while cylindrical body 18 is fitted firmly inside portion 14 of seat 11, with its outer surface engaging ribs 15. When torqued externally by means of element 7, screw 17 penetrates inside hole 19 so as to gradually expand cylindrical body 18 and so lock device 16 inside seat 11.

## Claims

1. An adjustable reflector (1), particularly for vehicle headlights, comprising a reflector body (2) of given, substantially constant thickness; a number of appendixes (4) extending rearwards of and integral with said reflector body (2); a joint (6) connecting each said appendix (4) to a respective support (3), each said joint (6) comprising a first (7) and second (9) mutually mating element; and fastening means (16)(25) for securing said first joint element (7) to said respective appendix (4); characterised by the fact that each said appendix (4), commencing from its free end, presents a tubular portion defined by a lateral wall (12) of substantially the same thickness as said reflector body (2); said lateral wall (12) defining an axial seat (11)-(22); and said fastening means (16)(25) comprising a body (18)(26) of substantially the same shape as and housed inside said seat (11)(22), and screw means (17)(17,20)(28,29) for force fitting said body (18)(26) inside said seat (11)(22).

2. A reflector as claimed in Claim 1, characterised by the fact that said seat (11) and said body (18) are substantially cylindrical; said body (18) being made of elastically deformable material and having an axial through hole (19), and said screw means (17,20) comprising a screw (17) integral with said first joint element (7), and nut means (20) connected to said screw (17) and located on the opposite side of said first joint element (7) in relation to said body (18).

3. A reflector as claimed in Claim 1, characterised by the fact that said seat (11) and said body (18) are substantially cylindrical; said body (18) being made of elastically deformable material and having an axial hole (19) of a given diameter, and said screw means (17) comprising a screw (17) integral with said first joint element (7) and having a diameter greater than said given diameter; said screw (17) providing for expanding and firmly engaging said body (18) inside said seat (11).

4. A reflector as claimed in Claim 3, characterised by the fact that, when undeformed, said body (18) presents an outside diameter at most equal to the inside diameter of said seat (11); the difference between the outside diameter of said screw (17) and the inside diameter of said hole (19) being greater than the difference between the inside diameter of said seat (11) and the outside diameter of said body (18).

5. A reflector as claimed in any one of the foregoing Claims from 2 to 4, characterised by the fact that said seat (11) presents a number of inwardly-projecting axial ribs (15) cooperating pressure-wise with the lateral surface of said body (18).

6. A reflector as claimed in Claim 1, characterised by the fact that said seat (22) and said body (26) are substantially truncated-cone-shaped; said body (26) presenting a diametrical transverse hole (27), and said screw means (28,29) being self-threading screw means comprising a helical blade (28) engaged through said diametrical hole (27); said blade (28) presenting opposite end portions (29) projecting outwards of said body (26) and defining the thread of said self-threading screw means (28,29).

7. A reflector as claimed in Claim 1, characterised by the fact that two diametrically-opposed axial grooves (23) are formed on the surface of said seat (22); the section of each said groove (23) being at least the same shape and size as a respective said end portion (29) projected perpendicular to the axis (5) of said seat (22).

8. A reflector as claimed in any one of the foregoing Claims, characterised by the fact that said joint means (6) comprise a spherical joint; said first and second joint elements consisting respectively of an elastically deformable socket element (7) defining a spherical seat (8), and a spherical head (9) designed to click inside said spherical seat (8).

Fig.1

Fig.2

Fig.5

Fig.6

Fig.3

Fig.4

19

18

13    15    10

14

15    15

15

12

4

.9

8    7

17

Fig. 7

Fig.8

**European Patent Office**

**EUROPEAN SEARCH REPORT**

Application Number

**EP 91 11 0688**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 298 551 (ALFA LANCIA INDUSTRIALE SPA) <br> * abstract; figure 3 * <br> – – – | 1 | B 60 Q 1/04 |
| A | DE-A-2 847 908 (FORD-WERKE AG) <br> * figures 7, 9 * <br> – – – | 1 | |
| A | DE-A-3 602 258 (ROBERT BOSCH GMBH) <br> * abstract; figure 1 * <br> – – – – – | 1 | |

TECHNICAL FIELDS
SEARCHED (Int. Cl.5)

B 60 Q

The present search report has been drawn up for all claims

| Place of search | Date of completion of search | Examiner |
|---|---|---|
| The Hague | 05 August 91 | ONILLON C.G.A. |